# EUROPEAN PATENT APPLICATION

(11) **EP 4 650 094 A1**
(43) Date of publication of application: **19.11.2025**
(21) Application number: 25174883.6
(22) Date of filing: 07.05.2025
(51) Int. Cl.: B23P 6/00, F01D 5/00, B23K 1/00, B23P 6/04, B23K 35/30, F01D 5/18

(54) **METHOD OF DIFFUSION BRAZE REPAIR OF COOLING HOLES AND CRACKS**

(30) Priority: 07.05.2024 US 202418657253
(71) Applicant: RTX Corporation, Farmington, CT 06032 (US)
(72) Inventor: LoRICCO, Nicholas, Farmington, 06032 (US)
(74) Representative: Dehns

(57) **Abstract**

A method for repairing a turbine part having a cooling hole (110) or crack (210), by inserting at least one superalloy wire or pin (140) into the cooling hole (110) or placing a superalloy wire (230) into the crack (210), providing a braze filler alloy (150) and diffusion brazing the turbine part, forming a new cooling hole (180) that is offset from the cooling hole (110) that was present on the turbine part, such that part of the at least one superalloy wire or pin (140) forms a part of the at least one wall of the newly formed cooling hole (110), or such that no part of the at least one superalloy wire or pin (140) or braze material is removed, or wherein the repaired crack (210) has a repaired surface along the surface of the turbine part, which is formed from a portion of the at least one superalloy wire (230).

## Description

### FIELD OF THE INVENTION

The subject matter disclosed herein relates to the repair of damaged cooling holes as well as surface erosion or cracks running along a surface of a turbine engine component, for example, a turbine vane, outer air seal, air foil or turbine blade.

### BACKGROUND OF THE INVENTION

Turbine blades and vanes as well as many other gas turbine engine component, e.g., outer air seals and air foils, can be made of nickel-based superalloys that may incorporate chromium, cobalt and/or rhenium or may be made of various other alloys such as titanium alloys as well as composite materials with fibers embedded therein, such as ceramic matrix composites - CMC materials, which in use are exposed to high temperature conditions, which can exceed the melting point of the material forming the turbine blade or vane or other turbine part. To avoid turbine part failure, which could include deformation to even melting, small cooling holes are present on such, parts, e.g., turbine vanes, blades, etc., having a hollow portion in their interior, and discharge cooling air from the blade or vane interior onto its surface forming a cooling film by the use of a compressor. The surfaces of the turbine blades and vanes, as well as of other turbine parts, can be protected by the use of various coatings, but nevertheless, to avoid turbine parts failure, coolant air needs to be delivered to the turbine vanes and blades to assure safe operation of the airplane onto which the turbine engine is installed.

Due to the harsh high temperature conditions at the surfaces of the turbine vanes and blades and other turbine parts, damage to the small cooling holes as well as the surfaces of the turbine blades/vanes occurs in the form of eroded portions, especially at or around the edges of the cooling holes, and cracks can appear and run across the surfaces of the turbine vanes and blades and other turbine parts.

One option is to often replace the turbine parts, but such is highly uneconomical, especially if a sufficient repair solution is available and at a lower cost, which in sum extends the life of the turbine parts, e.g., vanes, blades, etc.

High temperature diffusion braze has been used in the repair of turbine hardware for at least 50 years. This process involves using a blend of high-melt and low-melt superalloy powders in paste, slurry or preforms to repair damage such as cracks, wear, and surface erosion, including highly oxidized zones or areas damaged due to thermochemical reasons. The low melt phase is necessary for the diffusion braze process to sufficiently fill small cracks and cooling holes, but introduces unfavorable elements to the parent alloy, such as boron, that can reduce its capability. These unfavorable elements can also diffuse into coatings applied on top or inside of the alloy, reducing their effectiveness at forming stable, protective oxide layers. When applied in sufficient volumes, unfavorable athermal phases can remain in the repair region, reducing mechanical and thermal capability of the part.

Diffusion brazing relies on a two-step furnace cycle. The first, higher temperature cycle melts the braze material into cracks, surface erosion voids, and cooling holes which are to be restored during the repair. The second diffusion cycle reduces the temperature and holds it for a period of time in order to diffuse melt suppressants into the parent metal, causing the liquidous phases in the repair regions to isothermally solidify with the parent metal. This is usually performed in a furnace having a cavity into which the entire damaged part is inserted, and gas firing or heating elements are used to bring the furnace to the desired temperatures.

Disclosed herein is solution to the above issues stemming from the approach to repair hardware using the minimum viable amount of low-melt alloy blend, but achieving a sufficient, if not superior, quality of repair of the damaged portions of the turbine parts, such as vanes and blades, including cracks and cooling holes. The disclosure herein provides methods that lead to significant improvements in achieving such minimized use of low-melt alloy blends, and at the same time achieve not only sufficient repair to the turbine parts, such as vanes and blades, but exceeds expectations in the longevity of the repaired turbine parts.

Objectives of this disclosure include the improvement of the durability of overhauled repaired components, improving future repairability and time on wing of hot section components, as well as expanding the repairable design space to components that would otherwise be too debited in performance post repair to enable their use. And all these and more are achievable by a relatively simple process disclosed herein.

### SUMMARY OF THE INVENTION

A method for repairing a turbine part having a cooling hole according to an exemplary embodiment of this disclosure, by
a. inserting at least one superalloy wire or pin into the cooling hole, which cooling hole has a top opening and a bottom opening, and at least one wall forming the cooling hole,
b. providing a braze filler alloy at the top opening of the cooling hole,
c. diffusion brazing the turbine part, wherein the braze filler alloy melts and flows into the cooling hole and around the at least one superalloy wire or pin such that any voids between the at least one wall of the cooling hole and the at least one superalloy wire or pin are filled with the braze filler alloy,
d. cooling the turbine part, wherein the melted braze filler alloy solidifies, and forms a unitary part with both the turbine part and the at least one superalloy wire or pin,
e. form a new cooling hole
   i. that is offset from the cooling hole that was present on the turbine part, such that part of the at least one superalloy wire or pin forms a part of the at least one wall of the newly formed cooling hole, or
   ii. that is offset from the cooling hole that was present on the turbine part, such that no part of the at least one superalloy wire or pin or braze material is removed,
f. blending or smoothing the surface of the turbine part in the vicinity of the top opening of the cooling hole to remove any excess braze filler alloy and/or superalloy wire or pin extending past the surface of the turbine part.

In any of the embodiments disclosed herein concerning a method for repairing a turbine part having a cooling hole, wherein a new cooling hole can be formed that is offset from the cooling hole that was present on the turbine part, such that part of the at least one superalloy wire or pin forms a part of the at least one wall of the newly formed cooling hole

In any of the embodiments disclosed herein concerning a method for repairing a turbine part having a cooling hole, wherein a new cooling hole can be formed that is offset from the cooling hole that was present on the turbine part, such that no part of the at least one superalloy wire or pin or braze material is removed.

In any of the embodiments disclosed herein concerning a method for repairing a turbine part having a cooling hole, wherein the cooling hole can be cylindrical.

In any of the embodiments disclosed herein concerning a method for repairing a turbine part having a cooling hole, wherein one superalloy wire can be inserted into the cooling hole.

In any of the embodiments disclosed herein concerning a method for repairing a turbine part having a cooling hole, wherein part of the at least one superalloy wire or pin can form 10 to 50% of the at least one wall of the newly formed cooling hole.

In any of the embodiments disclosed herein concerning a method for repairing a turbine part having a cooling hole, wherein part of the at least one superalloy wire or pin can form 30 to 60% of the at least one wall of the newly formed cooling hole.

In any of the embodiments disclosed herein concerning a method for repairing a turbine part having a cooling hole, wherein the blending or smoothing the surface of the turbine part in the vicinity of the top opening of the cooling hole to remove any excess braze filler alloy and/or superalloy wire or pin extending past the surface of the turbine part leads to a smooth surface around the cooling hole, which surface in part is formed from the superalloy wire.

In any of the embodiments disclosed herein concerning a method for repairing a turbine part having a cooling hole, wherein the forming of the new cooling hole can be achieved by a drill.

In any of the embodiments disclosed herein concerning a method for repairing a turbine part having a cooling hole, wherein the at least one superalloy wire or pin can be made of a material that is different than the material forming the turbine part.

A method for repairing a turbine part having a crack extending along the surface of the turbine part according to an exemplary embodiment of this disclosure, by
a. placing at least one superalloy wire into the crack along the length of the crack or at least a portion of the length of the crack such that some portion of the at least one wire extends above the surface level of the part being repaired,
b. providing a braze filler alloy over the crack,
c. diffusion brazing the turbine part, wherein the braze filler alloy melts and flows into the crack and around the at least one superalloy wire such that any voids between the crack and the at least one superalloy wire are filled with the braze filler alloy,
d. cooling the turbine part, wherein the melted braze filler alloy solidifies, and forms a unitary part with both the turbine part and the superalloy wire,
e. blending or smoothing the surface of the turbine part along the crack to remove any excess braze filler alloy and/or superalloy wire extending past the surface of the turbine part, wherein the repaired crack has a repaired surface along the surface of the turbine part, which repaired surface of the crack is formed from a portion of the at least one superalloy wire.

In any of the embodiments disclosed herein concerning a method for repairing a turbine part having a crack, wherein one superalloy wire can be placed into the crack.

In any of the embodiments disclosed herein concerning a method for repairing a turbine part having a crack, wherein the repaired surface of the crack can be formed from a portion of the at least one superalloy wire, which represents 10 to 60% of the repaired surface of the crack.

In any of the embodiments disclosed herein concerning a method for repairing a turbine part having a crack, wherein the repaired surface of the crack can be formed from a portion of the at least one superalloy wire, which represents 50 to 95% of the repaired surface of the crack.

In any of the embodiments disclosed herein concerning a method for repairing a turbine part having a crack, wherein the at least one superalloy wire can be made of a material that is different than the material forming the turbine part.

A repaired turbine part having thereon a repaired cooling hole and/or a repaired crack along the surface of the turbine part according to an exemplary embodiment of this disclosure,
a. wherein the repaired cooling hole has part of at least one superalloy wire
   or pin forming a part of at least one wall of the repaired cooling hole, and/or
b. wherein the repaired crack has a repaired surface along the surface of the turbine part, which repaired surface of the crack is formed from a portion of at least one superalloy wire.

In any of the embodiments disclosed herein concerning a repaired turbine part, which has thereon a repaired cooling hole, wherein the repaired cooling hole can have part of at least one superalloy wire or pin forming 10 to 50% of at least one wall of the repaired cooling hole or which has thereon a repaired crack, wherein 50 to 95% of the repaired surface of the crack can be formed from a portion of at least one superalloy wire.

In any of the embodiments disclosed herein concerning a repaired turbine part, which has thereon a repaired cooling hole or crack, wherein the at least one superalloy wire or pin can be made of a material that is different than the material forming the turbine part.

A repaired turbine part that was repaired by the method for repairing a turbine part having a cooling hole.

A repaired turbine part that was repaired by the method for repairing a turbine part having a crack.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

The disclosed method provides a method for repairing a peripheral wall of a cooling hole as well as damage, such as oxidation damage, around the edges of the cooling hole, for example, close to the surface of a part, e.g., of a gas turbine engine, of a high-temperature part or component. Also disclosed is a method for repairing cracks that run along the surface of a part of high temperature component, for example, turbine vanes and blades.

When cooling holes as well as cracks on a component are filled with braze material during the repair process, boron or other melt suppressants are diffused into the parent alloy or material during isothermal solidification. When the volume of braze is sufficiently large, undesirable athermal phases are left behind as well, which are less capable then parent metal. This combination of diffused melt suppressants and athermal phases reduce the parts capability post-repair, making it more susceptible to damage, such as oxidation or thermo-mechanical fatigue (TMF). This is particularly true in regions with a high density of film holes and/or holes with a relatively large diameter as such regions require a large volume of braze to restore the part to design intent geometry. The disclosed process mitigates this risk by inserting superalloy wire or pins into cooling holes prior to braze application in order to minimize the amount of low melt phase braze filler alloy required to repair cooling holes. Moreover, this minimization is further enhanced by keeping at least some of the material from the superalloy wire or pins in the hole upon removal of the superalloy wire and/or pin, for example, by re-drilling the whole, such that at least some of the wall of the cooling hole is formed from the material of the wire or pin inserted.

The superalloy wire or pin may be the same material as the parent alloy of the part being repaired, or it may be a different material. In certain embodiments a different alloy is chosen to provide enhanced environmental, chemical, thermal or oxidative resistance than the parent material for the repaired portion of the turbine part, or perhaps a higher strength, or other physical property.

In certain situations, a 'true position' tolerance of a blade/vane cooling hole is present, which may be about 2 times or more the diameter of the cooling hole itself. In such instances, an option is to drill a new cooling hole into the parent material and not remove any part of the repaired cooling hole. As such, in this embodiment, none of the repair material is removed when the hole is, e.g., re-drilled after brazing. A benefit of this embodiment is that the repaired hole contains the superalloy wire or pin in its entirely, and only a minimal amount of braze material. Thus, the filled cooling hole has significantly better properties, e.g., mechanical, environmental, chemical, etc., than a cooling hole that would have been filled in with just braze material. This is due to the properties of the superalloy wire or pin being significantly more advantageous in a repaired part than of brazing material. Thus, the repaired turbine part this way has better oxidative or environmental properties than with prior art methods where significant amount of brazing material is present after the repair of a cooling hole. This advantage is even more enhanced in situations where a turbine part has undergone 3 or 4 prior repairs, where minimal parent metal remains after many braze/re-drill cycles without the use of a superalloy wire or pin remaining at least in part after the re-drilling. Not surprisingly, such parts having been repaired several times may have poor performance. Focusing on this aspect as well as the minimization of diffused melt suppressant remaining, including over multiple repair cycles, is where the durability benefit stands out.

In another embodiment, a part may be repaired such , e.g., upgraded, by repairing the cooling holes with the use of a superalloy wire or pin as provided herein, but providing a new cooling configuration to the part by providing new cooling holes that do not remove any of the superalloy wire or pin material, e.g., by drilling new holes that are offset from their original positions. This scenario provides a 100% mis-alignment of old to new cooling holes. This is an approach highly beneficial, for example, in cases where the repaired part's durability would otherwise limit the feasibility of such an upgrade or extensive repair.

In any of the embodiments disclosed herein, an approach is to maximize the amount of superalloy remaining in the repaired cooling hole or repaired crack in comparison to the amount of brazing material that remains present. For example, the amount of superalloy remaining from the wire or pin can be 10-100%, 20-95%, 30-90%, 40-80%, 50-70%, 90-99%, 90-95%, 95-99%, including any ranges that can be formed from any of these specific numbers.

The approach therefore achieves that at least a part of the wall, e.g., at the surface thereof, of the cooling hole is formed from a superalloy, and not from braze materials. As such, the use of braze materials is not only minimized during the repair, but the amount of braze material remaining exposed after repair is also minimized both at the surface of the repaired part as well as at the surface of the wall of the repaired cooling hole.

In an embodiment, the superalloy wire or pin is not a non-reactive high-temperature alumina ceramic.

Likewise in the case of repairing a crack running across a surface of a part, the approach achieves that a wire inserted into the crack after repair has part of the wire exposed to the surface of the repaired part, thereby minimizing the amount of braze material used overall, and also the amount of braze material remaining in the repaired portion and exposed to the surface of the repaired part.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings.
- Fig. 1a-1f: illustrate a procedure for repairing a damaged cooling hole by a braze process,
- Fig. 1a: illustrates a damaged cooling hole in its initial part condition, i.e., before repair, showing erosion damage around the periphery of the cooling hole,
- Fig. 1b: illustrates the insertion of a superalloy wire or pin, which may be several wires and/or pins, which is optionally solid, but may be hollow, into the cooling hole,
- Fig. 1c: illustrates braze paste, e.g., a braze filler alloy, applied to the exterior surface of the damaged cooling hole in the vicinity of the damage,
- Fig. 1d: illustrates the furnace melt cycle, where the braze paste is melted and fills voids between the superalloy wire and the cooling hole as well as melts into areas/volumes of damage around the periphery of the cooling hole,
- Fig. 1e: illustrates the furnace diffuse cycle, where the braze paste diffuses into or at least bonds to the parent alloy and the superalloy wire or pin as well as to the erosion damaged part,

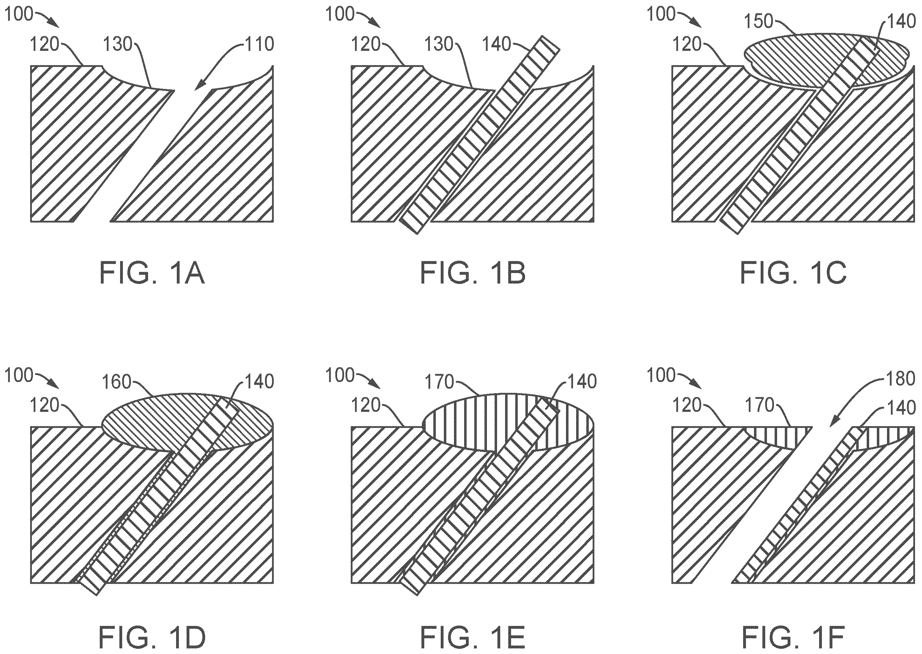

- Fig. 1f: illustrates the blending of the surface around the periphery of the damaged cooling hole as well as the re-drilling of the cooling hole such that at least a part of the superalloy wire remains in the hole and forms at least part of the cooling holes' side wall, which therefore minimizes the amount of braze material exposed to a surface of the repaired part and also minimizes the amount of braze material exposed to the wall of the cooling hole. Also shown in this figure is the blending of the surface of the part to yield a smooth surface. This new blended surface also has a part of the wire in the repaired cooling hole exposed to the surface, thereby here too limiting the amount of braze material exposed to the surface of the repaired part.
- Fig. 2a-2f: illustrate a procedure for repairing a crack, which may be an oxidized crack, running along a surface of a damaged part by a braze process,

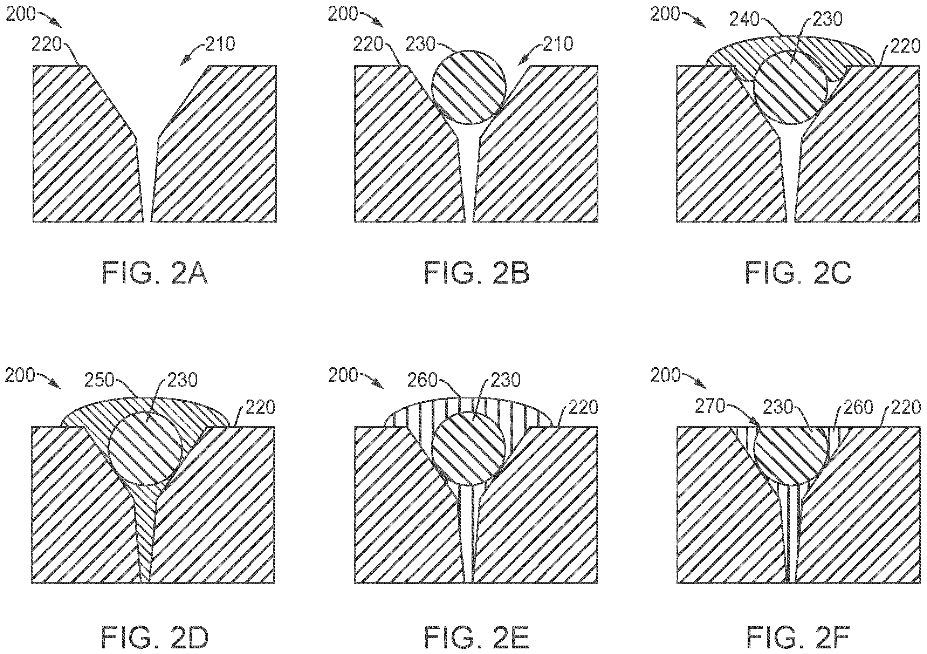

- Fig. 2a: illustrates a damaged part with a crack running along a surface of the part, the figure showing a cross section of the crack at one single point along the length of the crack, where the damaged part is in its initial part condition, i.e., before repair,
- Fig. 2b: illustrates the insertion of a superalloy wire, which is solid, into the crack to run along the length or a portion of the length of the crack,
- Fig. 2c: illustrates braze paste, e.g., a braze filler alloy, applied to the exterior surface of the crack, i.e., in the vicinity of the damage,
- Fig. 2d: illustrates the furnace melt cycle, where the braze paste is melted and fills voids between the superalloy wire and the crack as well as melts into areas/volumes of the damaged crack into which the wire could not be inserted,
- Fig. 2e: illustrates the furnace diffuse cycle, where the braze paste diffuses into or at least bonds to the parent alloy and the superalloy wire,
- Fig. 2f: illustrates the blending of the surface along the crack to yield a smooth surface, which new surface has a part of the wire in the repaired crack exposed to the surface, thereby limiting the amount of braze material exposed to the surface of the repaired part.

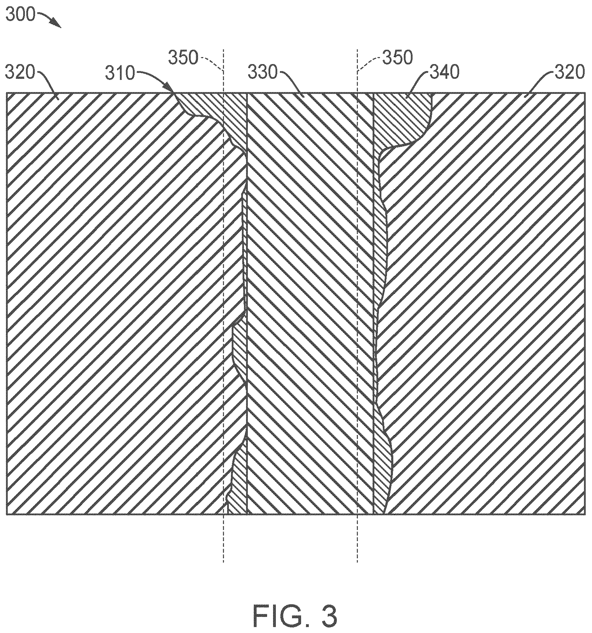

- Fig. 3: Illustrates a cooling hole having damage also inside the wall of the cooling hole as well as erosion damage at the surface of the part being repaired and showing the part being removed and the parts remaining by, e.g., drilling, the showing of the parts between the dashed line being removed, e.g., drilled out.

### Legend for Figures:

Fig. 1a-f:
   100 - damaged part having a cooling hole
   110 - cooling hole
   120 - parent alloy of the part
   130 - erosion damage at the surface of the damaged part around the cooling hole
   140 - superalloy wire or pin, which can be several wires and/or pins
   150 - braze filler alloy
   160 - melted braze filler alloy - melting and flowing into cooling hole around superalloy wire
   170 - braze filler alloy diffusing into or at least bonding to parent alloy, the superalloy wire or pin as well as to the erosion damaged part of the part being repaired
   180 - re-drilled cooling hole leaving slightly moved from original location so that some of the superalloy wire or pin forms part of the wall of the cooling hole
Fig. 2a-f:
   200 - damaged part having a crack along a surface - the illustration is a cross sectional view of the crack
   210 - crack
   220 - parent alloy
   230 - superalloy wire - view is a cross sectional view of the wire
   240 - braze filler alloy
   250 - melted braze filler alloy - melting and flowing into crack around superalloy wire as well as filling deeper parts of the crack into which the wire did not fit
   260 - braze filler alloy diffusing into or at least bonding to parent alloy and the superalloy wire
   270 - blending of the surface along the crack to yield a smooth surface, which new surface has a part of the wire in the repaired crack exposed to the surface, thereby limiting the amount of braze material exposed to the surface of the repaired part.
Fig. 3:
   300 - A part with a cooling hole having damage also inside the wall of the cooling hole as well as erosion damage at the surface of the part being repaired
   310 - Cooling hole with an eroded wall
   320 - parent alloy
   330 - superalloy wire
   340 - brazing alloy between the superalloy wire and the wall of the cooling hole
   350 - dashed lines show the path of a drill bit to remove material - the material between the dashed lines in this cross sectional view will be removed, e.g., by drilling

In more detail, Fig. 1a shows a cooling hole 110 with damage around the edges of the hole 130, such as erosion damage to a part, such as a turbine vane or blade. While there is likely some damage also to the interior walls of the cooling hole, such are not illustrated in detail in this figure. Fig. 1b illustrates that a superalloy wire or pin 140 is inserted into the cooling hole 110. The superalloy wire or pin 140 may be made of the same material as the parent alloy 120, or may be another suitable alloy, i.e., the superalloy in some embodiments is different than the alloy of the parent material. Fig. 1c shows that a braze filler alloy 150 is provided around the periphery of the damaged cooling hole and round and on optionally also on top of the superalloy wire. The damaged part in the next step in Fig. 1d is diffusion brazed, for example, by placing it into a diffusion brazing oven, where the brazing alloy melts and flows 160 into the cooling hole and fills in voids between the cooling hole and the superalloy wire. Fig. 1e illustrates that the brazing alloy diffuses 170 into and/or at least bonds to both the parent alloy and also to the superalloy wire or pin, thus forming a solid material as illustrated in Fig. 1e upon cooling. Fig. 1f shows that a new cooling hole 180 is provided, e.g., by drilling or by laser or any other suitable method, where the hole is placed such that a part of the wall of the re-drilled cooling hole is formed from the superalloy wire. Also, the surface of the part being repaired is smoothed, where material extending above the surface, such as some of the braze material and also a part of the superalloy wire, is removed, thereby leading to a smooth surface with a newly provided cooling hole in the repaired part.

While ideally the repaired part has holes in the same places as originally placed, a slight displacement as made by the repairing process as disclosed herein does not materially affect the proper functioning of the turbine vane or blade or of other turbine parts such as air foils or outer air seals.

In another embodiment, the part being repaired is drilled with a new cooling hole pattern, and none of the repair material is removed after the brazing operation, e.g., by drilling, other than the smoothing of the surface.

Noted is that while the shape of cooling hole is typically circular, in which case the hole has one single interior wall forming a cylindrically shaped cooling hole, the shape of the cooling hole is not restricted and may be in the form of a variety of shapes, e.g., elliptical, square, rectangular, hexagonal, star shaped, octagonal, pentagonal or any other suitable shape, including irregular shapes, even the shape of a webbed duck foot. In case the shape of the cooling hole has angles, such as in the case of a square cooling hole, one can consider that the wall of the hole is really formed from four walls corresponding to the four sides of the square.

Fig. 2a shows a part with a crack 210, which is to be understood to run along the surface of the damaged part at some length, such as a turbine vane or turbine blade. The view here is a cross sectional view of the crack, which is actually a typical shape of a crack for turbine vanes and blades. A superalloy wire or wires 230 are placed into the crack along the length of the crack or at least a portion of the crack as shown in Fig. 2b. The placement of the wire is such that some of the wire extends above the surface level of the part being repaired. Fig. 2c shows that a braze filler alloy 240 is provided around the top part of the crack and even on the superalloy wire along the length of the crack. The cracked part in the next step in Fig. 2d is diffusion brazed, for example, by placing it into a diffusion brazing oven, where the brazing alloy melts and flows 250 into the crack and fills voids between the crack and the superalloy wire, including the deeper and narrower parts of the crack. Fig. 2e illustrates that the brazing alloy diffuses 260 into and/or at least bonds to both the parent alloy 220 and also to the superalloy wire, thus forming a solid material as illustrated in Fig. 2e upon cooling. Fig. 2f shows that the surface of the part being repaired is smoothed 270, where material extending above the surface, such as some of the braze material and also a part of the superalloy wire, is removed, thereby leading to a smooth surface with a filled in crack that has exposed, as part of the repaired surface part, a portion of the superalloy wire.

Fig. 3 shows the repairing of a cooling hole 310 where the surface of the wall of the cooling hole is also eroded, i.e., is not smooth at all, as well as having some erosion damage at the surface of the part being repaired. The figure also shows an inserted superalloy wire or pin 330 as well as the gaps between the superalloy wire and the parent alloy 320, which are filled with the brazing alloy 340. The dashed lines show the path of a drill or laser or water jet, etc., 350, for example, by which the material between the dashed lines is removed. It is easily appreciable from this illustration that some part of the wall of the cooling hole is formed from the superalloy wire. Also easily appreciable is that because of the slight offset of the newly provided cooling hole, the other side of the wall of the cooling hole is formed, at least in large part, from the parent alloy. The brazing alloy that forms part of the wall of the cooling hole is highly minimized as part of the brazing material from the sealed cooling hole is removed or excised by the drill, while other parts of the brazing material remain between the superalloy wire and the parent alloy. Noted again is that the drill bit is replaceable by other method of removal of material, e.g., hole punch methods, or by the use of a laser, or by electron discharge machining (EDM) or by the use of a jet, such as water jet, or of other material, e.g., particles or other fluids.

Noted is that when the term drilling or re-drilling is used generally, it is not restricted to the use of an actual drill, but any of the methods for the removal of the material are included that are mentioned herein.

The repaired part has at least a part of the wall of the cooling hole being formed from the superalloy wire(s) or pin(s), which amounts to at least 10% of the wall of the cooling hole being formed from the superalloy wire(s) or pin(s), or at least 20%, or at least 30%, or at least 40%, or at least 50%, or at least 60%, or at least 70%, or at least 80%, or at least 90%, or at least 95%, or at least 98% or at least 99%, or even higher, e.g., 100%, including ranges formed from any of these specific values, e.g., the wall of the repaired cooling hole being formed from the superalloy wire(s) or pin(s) being, for example, 10 to 50%, 10 to 60%, 20 to 50%, 30 to 40%, 30 to 60 %, 40 to 80%, 50 to 80%, 80 to 99%, 90 to 99%, 95 to 100%. In some embodiments, the objective is to maximize the amount of superalloy forming the wall of the newly formed cooling hole.

In case of a repaired crack, the repaired part has at least a part of the smoothed surface where the crack has been repaired formed from the superalloy wire or wires, which amounts to at least 10% of the smoothed surface where the crack has been repaired being formed from the superalloy wire or wires, or at least 20%, or at least 30%, or at least 40%, or at least 50%, or at least 60%, or at least 70%, or at least 80%, or at least 90%, or even higher, e.g., at least 95% or 99%, including ranges formed from any of these specific values, for example, 10 to 60%, 20 to 50%, 30 to 40%, 30 to 80%, 40 to 80%, 50 to 80%, 60 to 90%, 50 to 95%, 70 to 95%, 80 to 95%, 80 to 99% or 90 to 99%. In some embodiments, the objective is to maximize the amount of superalloy forming the wall of the smoothed surface of the repaired crack.

The methods disclosed herein reduce the amount of boron diffusing into the parent metal of an overhauled vane, for example, by utilizing superalloy wire or it could be a pin, to prefill cooling holes prior to braze paste application. By doing so, this process improves the capability of parent metal post repair. It also enables the filling of larger cooling holes that would otherwise pose a challenge to braze repair. Prior technology fills cooling holes with a blend of high/low melt phases that demonstrate sufficient capability to fill cracks and cooling holes. This blend may have a very high percentage of low melt phase in some circumstances.

As used herein, the term "about" and "approximately" have the typical meanings in the art, however in a particular example "about" and "approximately" can mean deviations of up to 10% of the values described herein.

Although the different examples or embodiments are illustrated as having specific components, the examples of this disclosure are not limited to those particular combinations. It is possible to use some of the components or features from any of the embodiments in combination with features or components from any of the other embodiments.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A method for repairing a turbine part having a cooling hole (110), comprising:
inserting at least one superalloy wire or pin (140) into the cooling hole (110), which cooling hole (110) has a top opening and a bottom opening, and at least one wall forming the cooling hole (110);
providing a braze filler alloy (150) at the top opening of the cooling hole (110);
diffusion brazing the turbine part, wherein the braze filler alloy (150) melts and flows into the cooling hole (110) and around the at least one superalloy wire or pin (140) such that any voids between the at least one wall of the cooling hole (110) and the at least one superalloy wire or pin (140) are filled with the braze filler alloy (150);
cooling the turbine part, wherein the melted braze filler alloy (150) solidifies, and forms a unitary part with both the turbine part and the at least one superalloy wire or pin (140);
forming a new cooling hole (180):
that is offset from the cooling hole (110) that was present on the turbine part, such that part of the at least one superalloy wire or pin (140) forms a part of the at least one wall of the newly formed cooling hole (110), or
that is offset from the cooling hole (110) that was present on the turbine part, such that no part of the at least one superalloy wire or pin (140) or braze material is removed; and
blending or smoothing the surface of the turbine part in the vicinity of the top opening of the cooling hole (110) to remove any excess braze filler alloy (150) and/or superalloy wire or pin (140) extending past the surface of the turbine part.

2. The method according to claim 1, wherein a new cooling hole (180) is formed that is offset from the cooling hole (110) that was present on the turbine part, such that part of the at least one superalloy wire or pin (140) forms a part of the at least one wall of the newly formed cooling hole (110).

3. The method according to claim 1, wherein a new cooling hole (180) is formed that is offset from the cooling hole (110) that was present on the turbine part, such that no part of the at least one superalloy wire or pin (140) or braze material is removed.

4. The method according to claim 1, 2 or 3, wherein the cooling hole (110) is cylindrical.

5. The method according to any preceding claim, wherein one superalloy wire (140) is inserted into the cooling hole (110).

6. The method according to any preceding claim, wherein:
part of the at least one superalloy wire or pin (140) forms 10 to 50% of the at least one wall of the newly formed cooling hole (110); or
part of the at least one superalloy wire or pin (140) forms 30 to 60% of the at least one wall of the newly formed cooling hole (110).

7. The method according to any preceding claim, wherein the blending or smoothing the surface of the turbine part in the vicinity of the top opening of the cooling hole (110) to remove any excess braze filler alloy (150) and/or superalloy wire or pin (140) extending past the surface of the turbine part leads to a smooth surface around the cooling hole (110), which surface in part is formed from the superalloy wire (140).

8. The method according to any preceding claim, wherein the forming of the new cooling hole (180) is achieved by a drill.

9. A method for repairing a turbine part having a crack (210) extending along the surface of the turbine part, comprising:
placing at least one superalloy wire (230) into the crack (210) along the length of the crack (210) or at least a portion of the length of the crack (210) such that some portion of the at least one wire (230) extends above the surface level of the part being repaired;
providing a braze filler alloy (240) over the crack (210),
diffusion brazing the turbine part, wherein the braze filler alloy (240) melts and flows (250) into the crack (210) and around the at least one superalloy wire such that any voids between the crack (210) and the at least one superalloy wire (230) are filled with the braze filler alloy (240);
cooling the turbine part, wherein the melted braze filler alloy (240) solidifies, and forms a unitary part with both the turbine part and the superalloy wire (230);
blending or smoothing the surface of the turbine part along the crack (210) to remove any excess braze filler alloy (240) and/or superalloy wire (230) extending past the surface of the turbine part, wherein the repaired crack (210) has a repaired surface along the surface of the turbine part, which repaired surface of the crack (210) is formed from a portion of the at least one superalloy wire (230).

10. The method according to claim 9, wherein one superalloy wire (230) is placed into the crack (210).

11. The method according to claim 9 or 10, wherein:
the repaired surface of the crack (210) is formed from a portion of the at least one superalloy wire (230), which represents 10 to 60% of the repaired surface of the crack (210); or
the repaired surface of the crack (210) is formed from a portion of the at least one superalloy wire (230), which represents 50 to 95% of the repaired surface of the crack (210).

12. A repaired turbine part having thereon a repaired cooling hole (110) and/or a repaired crack (210) along the surface of the turbine part, wherein:
the repaired cooling hole (110) has part of at least one superalloy wire or pin (140) forming a part of at least one wall of the repaired cooling hole (110); and/or
the repaired crack (210) has a repaired surface along the surface of the turbine part, which repaired surface of the crack (210) is formed from a portion of at least one superalloy wire (230).

13. The repaired turbine part according to claim 12, which has thereon a repaired cooling hole (110), wherein the repaired cooling hole (110) has part of at least one superalloy wire or pin (140) forming 10 to 50% of at least one wall of the repaired cooling hole (110), or which has thereon a repaired crack (210), wherein 50 to 95% of the repaired surface of the crack (210) is formed from a portion of at least one superalloy wire (230).

14. The method or repaired turbine part according to any preceding claim, wherein the at least one superalloy wire or pin (140; 230) is made of a material that is different than the material forming the turbine part.

15. A repaired turbine part that was repaired by the method of any of claims 1 to 11 and 14.
